# EUROPEAN PATENT APPLICATION

(11) **EP 3 028 589 A1**
(43) Date of publication of application: **08.06.2016**
(21) Application number: 16151098.7
(22) Date of filing: 16.12.2005
(51) Int. Cl.: A43B 13/20, B29D 35/14

(54) **METHOD OF THERMOFORMING A FLUID-FILLED BLADDER**

(30) Priority: 30.12.2004 US 27303
(62) Divisional of application: 05854451.1
(71) Applicant: NIKE Innovate C.V., Beaverton, OR 97005-6453 (US)
(72) Inventor: SCHINDLER, Eric, Beaverton, OR 97005-6453 (US); RAPAPORT, Zvi, Portland, OR 97219 (US)
(74) Representative: Tombling, Adrian George

(57) **Abstract**

A method for forming a fluid-filled bladder (200, 40A, 40B, 40C, 40D, 40E, 40) is disclosed. The method includes placing a core (220, 22Q) between a first sheet (212) and a second sheet (214) of thermoplastic material. The first sheet (212), the second sheet (214), and the core (220, 22Q) are compressed in a mold (300) such that a first portion of the mold (300) contacts the first sheet (212) to bond the first sheet (212) to the core (220, 22Q), and the first portion (330) of the mold (300) contacts and shapes substantially all of a sidewall (213) area of the first sheet (212) to form a sidewall (213) of the bladder (200, 40A, 40B, 40C, 40D, 40E, 40) from the sidewall (213) area. A second portion (370) of the mold (300) also contacts the second sheet (214) to bond the second sheet (214) to the core (220, 22Q). In addition, the first sheet (212) and the second sheet (214) are compressed together around the periphery of the core (220, 22Q) to form a peripheral bond (216, 53A, 53B, 53C, 53D, 53E, 53) between the second sheet (214) and the sidewall (213).

## Description

### CROSS-REFERENCE TO RELATED APPLICATIONS

This U.S. Patent Application is a continuation-in-part application and claims priority to (a) U.S. Patent Application serial number 09/995,003, which was filed in the U.S. Patent and Trademark Office on November 26, 2001 and entitled Method Of Thermoforming A Bladder Structure and (b) U.S. Patent Application serial number 10/783,028, which was filed in the U.S. Patent and Trademark Office on February 23, 2004 and entitled Fluid-Filled Bladder Incorporating A Foam Tensile Member, such prior U.S. Patent Applications being entirely incorporated herein by reference.

### BACKGROUND OF THE INVENTION

### Field of the Invention

The present invention relates to a method for thermoforming a fluid-filled bladder for use in a variety of applications, including footwear soles.

### Description of Background Art

A conventional article of athletic footwear includes two primary elements, an upper and a sole structure. The upper provides a covering for the foot that securely receives and positions the foot with respect to the sole structure. In addition, the upper may have a configuration that protects the foot and provides ventilation, thereby cooling the foot and removing perspiration. The sole structure is secured to a lower surface of the upper and is generally positioned between the foot and the ground. In addition to attenuating ground reaction forces (i.e., imparting cushioning), the sole structure may provide traction and control potentially harmful foot motion, such as over pronation. Accordingly, the upper and the sole structure operate cooperatively to provide a comfortable structure that is suited for a wide variety of ambulatory activities, such as walking and running. The general features and configuration of the upper and the sole structure are discussed in greater detail below.

The sole structure of athletic footwear generally exhibits a layered structure that includes a comfort-enhancing insole, a resilient midsole formed from a polymer foam, and a ground-contacting outsole that provides both abrasion-resistance and traction. Suitable polymer foam materials for the midsole include ethylvinylacetate or polyurethane that compress resiliently under an applied load to attenuate ground reaction forces and absorb energy. Conventional foam materials are resiliently compressible, in part, due to the inclusion of a plurality of open or closed cells that define an inner volume substantially displaced by gas. That is, the foam includes bubbles formed in the material that enclose the gas. Following repeated compressions, however, the cell structure may deteriorate, thereby resulting in decreased compressibility of the foam. Thus, the force attenuation and energy absorption characteristics of the midsole may decrease over the lifespan of the footwear.

One way to overcome the drawbacks of utilizing conventional foam materials is disclosed in U.S. Patent Number 4,183,156 to Rudy, hereby incorporated by reference, in which cushioning is provided by inflatable inserts formed of elastomeric materials. The inserts include a plurality of tubular chambers that extend substantially longitudinally throughout the length of the footwear. The chambers are in fluid communication with each other and jointly extend across the width of the footwear. U.S. Patent Number 4,219,945 to Rudy, hereby incorporated by reference, discloses an inflated insert encapsulated in a foam material. The combination of the insert and the encapsulating material functions as a midsole. An upper is attached to the upper surface of the encapsulating material and an outsole or tread member is affixed to the lower surface.

Such bladders are generally formed of an elastomeric material and are structured to have an upper or lower surface that encloses one or more chambers therebetween. The chambers are pressurized above ambient pressure by inserting a nozzle or needle connected to a fluid pressure source into a fill inlet formed in the bladder. After the chambers are pressurized, the fill inlet is sealed, for example, by welding, and the nozzle is removed.

Bladders of this type have been manufactured by a two-film technique, in which two separate sheets of elastomeric film are formed to exhibit the overall peripheral shape of the bladder. The sheets are then welded together along their respective peripheries to form a sealed structure, and the sheets are also welded together at predetermined interior areas to give the bladder a desired configuration. That is, the interior welds provide the bladder with chambers having a predetermined shape and size at desired locations. Such bladders have also been manufactured by a blow-molding technique, wherein a liquefied elastomeric material is placed in a mold having the desired overall shape and configuration of the bladder. The mold has an opening at one location through which pressurized air is provided. The pressurized air forces the liquefied elastomeric material against the inner surfaces of the mold and causes the material to harden in the mold, thereby forming a bladder with the desired shape and configuration.

Another type of prior art bladder suitable for footwear applications is disclosed in U.S. Patent Numbers 4,906,502 and 5,083,361, both to Rudy, and both hereby incorporated by reference. This type of bladder is formed as a fluid pressurized and inflated structure that comprises a hermetically sealed outer barrier layer which is securely fused substantially over the entire outer surfaces of a tensile member having the configuration of a double-walled fabric core. The tensile member is comprised of first and second outer fabric layers that are normally spaced apart from one another at a predetermined distance. Connecting or drop yarns, potentially in the form of multi-filament yarns having many individual fibers, extend internally between the proximal or facing surfaces of the respective fabric layers. The filaments of the drop yarns form tensile restraining means and are anchored to the respective fabric layers. A suitable method of manufacturing the double walled fabric structure is double needle bar raschel knitting.

U.S. Patent Numbers 5,993,585 and 6,119,371, both issued to Goodwin et al., and both hereby incorporated by reference, disclose a bladder utilizing a tensile member, but without a peripheral seam located midway between the upper and lower surfaces of the bladder. Instead, the seam is located adjacent to the upper surface of the bladder. Advantages in this design include removal of the seam from the area of maximum sidewall flexing and increased visibility of the interior of the bladder, including the connecting yarns. The process utilized to form a bladder of this type involves the formation of a shell, which includes a lower surface and a sidewall, with a mold. A tensile member is placed on top of a covering sheet, and the shell, following removal from the mold, is placed over the covering sheet and tensile member. The assembled shell, covering sheet, and tensile member are then moved to a lamination station where radio frequency energy fuses opposite sides of the tensile member to the shell and covering sheet and fuses a periphery of the shell to the covering sheet. The bladder is then pressurized by inserting a fluid so as to place the connecting yarns in tension.

The prior art methods of producing bladders utilizing a double-walled fabric core have made them costly and time consuming to manufacture. For example, the double-walled fabric core is typically secured within the bladder by attaching a layer of thermally activated fusing agent to the outer surfaces of the core, and then heating the bladder components to cause the fusing agent to melt, thereby securing the core the outer layers of the bladder. In practice, it is time consuming to add the fusing agent to the outer surfaces of the core arid requires additional manufacturing steps, thereby increasing overall cost.

### SUMMARY OF THE INVENTION

The present invention is a method for forming a fluid-filled bladder. The method includes placing at least one core between a first sheet and a second sheet of thermoplastic material. The first sheet, the second sheet, and the core are compressed in a mold such that a first portion of the mold contacts the first sheet adjacent to the core to bond the first sheet to the core, and the first portion of the mold contacts and shapes substantially all of a sidewall area of the first sheet to form a sidewall of the bladder from the sidewall area. A second portion of the mold also contacts the second sheet adjacent to the core, thereby bonding the second sheet to the core. In addition, the first sheet and the second sheet are compressed together around the periphery of the core to form a peripheral bond between the second sheet and the sidewall of the first sheet.

The core may be a foam member. In some embodiments, a channel is formed that extends at least partially through the foam member, or a plurality of channels that extend through the foam member are formed. A polymer of the foam material may be bondable to the thermoplastic material of the first sheet and the second sheet. In some embodiments, the first sheet, the second sheet, and the core are heated to facilitate the bonding and shaping of the bladder components.

When the bladder components are in the mold, a portion of the first sheet may be formed into a substantially planar first surface of the bladder, and the second sheet may be formed into a substantially planar second surface of the bladder, with the first surface being substantially parallel with the second surface. The peripheral bond may also be formed at a location substantially coinciding with the second surface.

The core may also be a textile member. In some embodiments, the core may have a first outer layer and a second outer layer, the outer layers being spaced apart and connected together by a plurality of connecting members. In addition, the bladder may be incorporated into a sole structure of an article of footwear.

The advantages and features of novelty characterizing the present invention are pointed out with particularity in the appended claims. To gain an improved understanding of the advantages and features of novelty, however, reference may be made to the following descriptive matter and accompanying drawings that describe and illustrate various embodiments and concepts related to the invention.

### DESCRIPTION OF THE DRAWINGS

The foregoing Summary of the Invention, as well as the following Detailed Description of the Invention, will be better understood when read in conjunction with the accompanying drawings.
Figure 1 is a lateral elevational view of an article of footwear incorporating a first bladder in accordance with the present invention.
Figure 2 is a perspective view of the first bladder.
Figure 3 is a side elevational view of the first bladder.
Figure 4 is a top plan view of the first bladder.
Figure 5A is a first cross-sectional view of the first bladder, as defined along section line 5A-5A in Figure 4.
Figure 5B is a second cross-sectional view of the first bladder, as defined along section line 5B-5B in Figure 4.
Figure 6 is a perspective view of a tensile member portion of the first bladder.
Figure 7 is a perspective view of a second bladder in accordance with the present invention.
Figure 8 is a side elevational view of the second bladder.
Figure 9 is a top plan view of the second bladder.
Figure 10A is a first cross-sectional view of the second bladder, as defined along section line 10A-10A in Figure 9.
Figure 10B is a second cross-sectional view of the second bladder, as defined along section line 10B-10B in Figure 9.
Figure 11 is a perspective view of a tensile member portion of the second bladder.
Figure 12 is a lateral elevational view of an article of footwear incorporating a third bladder in accordance with the present invention.
Figure 13 is a perspective view of the third bladder.
Figure 14 is a side elevational view of the third bladder.
Figure 15 is a front elevational view of the third bladder.
Figure 16 is a back elevational view of the third bladder.
Figure 17 is a top plan view of the third bladder.
Figure 18A is a first cross-sectional view of the third bladder, as defined along section line 18A-18A in Figure 17.
Figure 18B is a second cross-sectional view of the third bladder, as defined along section line 18B-18B in Figure 17.
Figure 19 is a perspective view of a tensile member portion of the third bladder.
Figure 20 is a perspective view of a fourth bladder in accordance with the present invention.
Figure 21 is a side elevational view of the fourth bladder.
Figure 22A is a first cross-sectional view of the fourth bladder, as defined along section line 22A-22A in Figure 21.
Figure 22B is a second cross-sectional view of the fourth bladder, as defined along section line 22B-22B in Figure 21.
Figure 23 is a perspective view of a tensile member portion of the fourth bladder.
Figure 24 is a perspective view of a fifth bladder in accordance with the present invention.
Figure 25 is a side elevational view of the of the fifth bladder.
Figure 26A is a first cross-sectional view of the fifth bladder, as defined along section line 26A-26A in Figure 25.
Figure 26B is a second cross-sectional view of the fifth bladder, as defined along section line 26B-26B in Figure 25.
Figure 27 is a perspective view of a sixth bladder in accordance with the present invention.
Figure 28 is a side elevational view of the of the sixth bladder.
Figure 29A is a first cross-sectional view of the sixth bladder, as defined along section line 29A-29A in Figure 28.
Figure 29B is a second cross-sectional view of the sixth bladder, as defined along section line 29B-29B in Figure 28.
Figure 30 is an elevational view of an article of footwear incorporating a bladder formed in accordance with a method of the present invention.
Figure 31A is a perspective view of a bladder formed in accordance with a method of the present invention.
Figure 31B is a top plan view of the bladder in Figure 31A.
Figure 31C is a cross-sectional view along line 31C-31C in Figure 31B.
Figure 32 is a perspective exploded view of a lower mold portion in accordance with the present invention.
Figure 33 is a perspective exploded view of an upper mold portion in accordance with the present invention.
Figure 34 is a perspective view of the lower mold portion aligned with the upper mold portion.
Figure 35A is a first cross-sectional view along line 35-35 in Figure 34 with uncompressed bladder components located between the upper mold portion and the lower mold portion.
Figure 35B is a second cross-sectional view along line 35-35 in Figure 34 with partially compressed bladder components located between the upper mold portion and the lower mold portion.
Figure 35C is a third cross-sectional view along line 35-35 in Figure 34 with compressed bladder components located between the upper mold portion and the lower mold portion.
Figure 36 is a perspective view of bonded components that include four uninflated bladders.
Figure 37A is a first cross-sectional view, which corresponds with Figure 35A, of another embodiment, wherein uncompressed bladder components, including a foam core, are located between the upper mold portion and the lower mold portion.
Figure 37B is a second cross-sectional view, which corresponds with Figure 35B, of the another embodiment, wherein partially compressed bladder components, including a foam core, are located between the upper mold portion and the lower mold portion.
Figure 37C is a third cross-sectional view, which corresponds with Figure 35B, of the another embodiment, wherein compressed bladder components, including a foam core, are located between the upper mold portion and the lower mold portion.

### DETAILED DESCRIPTION OF THE INVENTION

The following discussion and accompanying figures disclose various articles of athletic footwear incorporating a fluid-filled bladder in accordance with the present invention. Concepts related to the footwear, and more particularly the fluid-filled bladders, are disclosed with reference to footwear having a configuration that is suitable for running. The invention is not solely limited to footwear designed for running, however, and may be applied to a wide range of athletic footwear styles, including basketball shoes, cross-training shoes, walking shoes, tennis shoes, soccer shoes, and hiking boots, for example. In addition, the invention may also be applied to footwear styles that are generally considered to be non-athletic, including dress shoes, loafers, sandals, and work boots. Accordingly, one skilled in the relevant art will recognize that the concepts disclosed herein apply to a wide variety of footwear styles, in addition to the specific style discussed in the following material and depicted in the accompanying figures.

In addition to footwear, the fluid-filled bladder may be incorporated into a variety of other products, including straps for carrying backpacks and golf bags, cushioning pads for football or hockey, or bicycle seats, for example. Although the fluid-filled bladder is suited for various types of athletic products, the fluid-filled bladder may also be incorporated into various non-athletic products, such as inflatable mattresses and pressure-sensing seat cushions, for example. Accordingly, the various fluid-filled bladders disclosed below with respect to footwear may be used in connection with a variety of products.

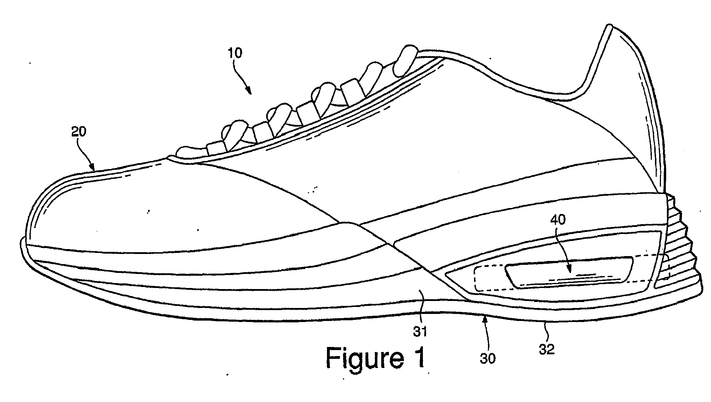

An article of footwear 10 is depicted in Figure 1 and includes an upper 20 and a sole structure 30. Upper 20 has a substantially conventional configuration and includes a plurality elements, such as textiles, foam, and leather materials, that are stitched or adhesively bonded together to form an interior void for securely and comfortably receiving the foot. Sole structure 30 is positioned below upper 20 and includes two primary elements, a midsole 31 and an outsole 32. Midsole 31 is secured to a lower surface of upper 20, through stitching or adhesive bonding for example, and operates to attenuate forces and absorb energy as sole structure 30 impacts the ground. That is, midsole 31 is structured to provide the foot with cushioning during walking or running, for example. Outsole 32 is secured to a lower surface of midsole 31 and is formed of a durable, wear-resistant material that is suitable for engaging the ground. In addition, sole structure 30 may include an insole (not depicted), which is a thin cushioning member, located within the void and adjacent to the plantar surface of the foot to enhance the comfort of footwear 10.

Midsole 31 is primarily formed of a polymer foam material, such as polyurethane or ethylvinylacetate, that encapsulates a fluid-filled bladder 40. As depicted in Figure 1, bladder 40 is positioned in a heel region of midsole 31, but may be positioned in any region of midsole 31 to obtain a desired degree of cushioning response. Furthermore, midsole 31 may encapsulate multiple fluid-filled bladders having the general configuration of bladder 40. Bladder 40 may be only partially encapsulated within midsole 31 or entirely encapsulated within midsole 31. For example, portions of bladder 40 may protrude outward from a side surface of midsole 31, or an upper surface of bladder 40 may coincide with an upper surface of midsole 31. Alternately, midsole 31 may extend over and entirely around bladder 40. Accordingly, the position of bladder 40 with respect to footwear 10 may vary significantly within the scope of the present invention.

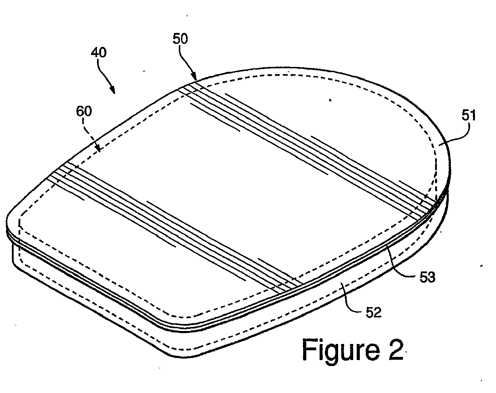

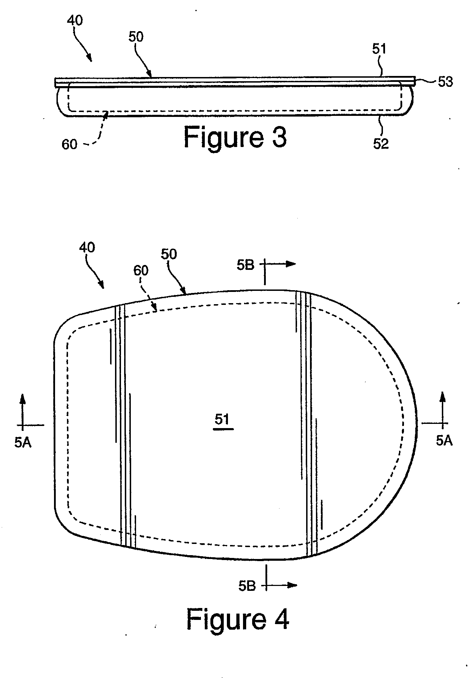

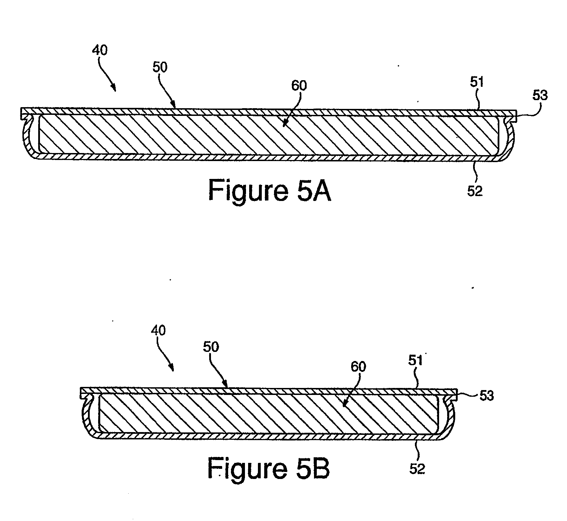

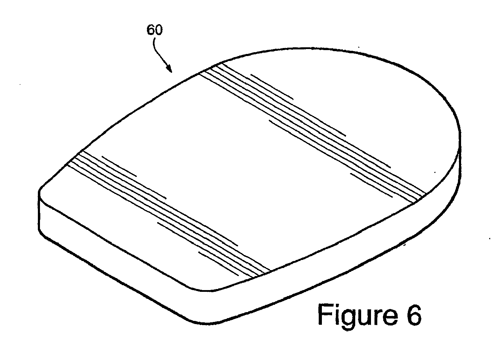

The primary elements of bladder 40, as depicted in Figures 2-6, are an outer barrier 50 and a tensile member 60. Barrier 50 includes a first barrier layer 51 and a second barrier layer 52 that are substantially impermeable to a pressurized fluid contained by bladder 40. The pressurized fluid will, therefore, generally remain sealed within bladder 40 for a duration that includes the expected life of footwear 10. First barrier layer 51 and second barrier layer 52 are bonded together around their respective peripheries to form a peripheral bond 53 and cooperatively form a sealed chamber, in which tensile member 60 and the pressurized fluid are located.

Tensile member 60 is a foam element that is bonded to each of first barrier layer 51 and second barrier layer 52. The upper and lower surface of tensile member 60 are generally planar and parallel, and tensile member 60 is depicted as having a continuous configuration that does not include any apertures or other discontinuities. In further embodiments of the invention, the upper and lower surface of tensile member 60 may be non-planar and non-parallel, and various apertures may extend through or partially through tensile member 60. In addition, the density or compressibility of the material forming various portions of tensile member 60 may vary. For example, the portion of tensile member 60 located in a lateral area of footwear 10 may exhibit a different density than the portion of tensile member 60 located in a medial area of footwear 10 in order to limit the degree of pronation in the foot during running.

The pressurized fluid contained by bladder 40 induces an outward force upon barrier 50 and tends to separate or otherwise press outward upon first barrier layer 51 and second barrier layer 52. In the absence of tensile member 60, the outward force induced by the pressurized fluid would impart a rounded or otherwise bulging configuration to bladder 40. Tensile member 60, however, is bonded to each of first barrier layer 51 and second barrier layer 52 and restrains the separation of first barrier layer 51 and second barrier layer 52. Accordingly, tensile member 60 is placed in tension by the fluid and retains the generally flat configuration of bladder 40 that is depicted in the figures.

As discussed above, tensile member 60 is bonded to each of first barrier layer 51 and second barrier layer 52. A variety of bonding methods may be employed to secure barrier 50 and tensile member 60 together, and the bonding methods may be at least partially determined by the materials selected for each of barrier 50 and tensile member 60. For example, an adhesive may be utilized to bond the components when barrier 50 is formed from a thermoplastic polymer material and tensile member 60 is formed from a thermoset polymer material. When at least one of barrier 50 and tensile member 60 are formed from a thermoplastic polymer material, however, direct bonding may be an effective manner of securing barrier 50 and tensile member 60.

As utilized within the present application, the term "direct bond", or variants thereof, is defined as a securing technique between barrier 50 and tensile member 60 that involves a melting or softening of at least one of barrier 50 and tensile member 60 such that the materials of barrier 50 and tensile member 60 are secured to each other when cooled. In general, the direct bond may involve the melting or softening of both barrier 50 and tensile member 60 such that the materials diffuse across a boundary layer between barrier 50 and tensile member 60 and are secured together when cooled. The direct bond may also involve the melting or softening of only one of barrier 50 and tensile member 60 such that the molten material extends into crevices or cavities formed by the other material to thereby secure the components together when cooled. Accordingly, a direct bond between barrier 50 and tensile member 60 does not generally involve the use of adhesives. Rather, barrier 50 and tensile member 60 are directly bonded to each other.

A variety of thermoplastic polymer materials may be utilized for barrier 50, including polyurethane, polyester, polyester polyurethane, and polyether polyurethane. Another suitable material for barrier 50 is a film formed from alternating layers of thermoplastic polyurethane and ethylene-vinyl alcohol copolymer, as disclosed in U.S. Patent Numbers 5,713,141 and 5,952,065 to Mitchell et al, hereby incorporated by reference. A variation upon this material wherein the center layer is formed of ethylene-vinyl alcohol copolymer; the two layers adjacent to the center layer are formed of thermoplastic polyurethane; and the outer layers are formed of a regrind material of thermoplastic polyurethane and ethylene-vinyl alcohol copolymer may also be utilized. Barrier 50 may also be formed from a flexible microlayer membrane that includes alternating layers of a gas barrier material and an elastomeric material, as disclosed in U.S. Patent Numbers 6,082,025 and 6,127,026 to Bonk et al., both hereby incorporated by reference. In addition, numerous thermoplastic urethanes may be utilized, such as PELLETHANE, a product of the Dow Chemical Company; ELASTOLLAN, a product of the BASF Corporation; and ESTANE, a product of the B.F. Goodrich Company, all of which are either ester or ether based. Still other thermoplastic urethanes based on polyesters, polyethers, polycaprolactone, and polycarbonate macrogels may be employed, and various nitrogen blocking materials may also be utilized. Additional suitable materials are disclosed in U.S. Patent Numbers 4,183,156 and 4,219,945 to Rudy, hereby incorporated by reference. Further suitable materials include thermoplastic films containing a crystalline material, as disclosed in U.S. Patent Numbers 4,936,029 and 5,042,176 to Rudy, hereby incorporated by reference, and polyurethane including a polyester polyol, as disclosed in U.S. Patent Numbers 6,013,340; 6,203,868; and 6,321,465 to Bonk et al., also hereby incorporated by reference.

Both thermoplastic and thermoset polymer materials may be utilized for barrier 50. An advantage of utilizing a thermoplastic polymer material over a thermoset polymer material for barrier 50 is that first barrier layer 51 and second barrier layer 52 may be bonded together through the application of heat at the position of peripheral bond 53. In addition, first barrier layer 51 and second barrier layer 52 may be heated and stretched to conform to the desired shape of barrier 50. Whereas first barrier layer 51 forms the upper surface of bladder 40, second barrier layer 52 forms both the lower surface and a majority of a sidewall of bladder 40. This configuration positions peripheral bond 53 adjacent to the upper surface and promotes visibility through the sidewall. Alternately, peripheral bond 53 may be positioned adjacent to the lower surface or at a location that is between the upper surface and the lower surface. Peripheral bond 53 may, therefore, extend through the sidewall such that both first barrier layer 51 and second barrier layer 52 form substantially equal portions of the sidewall. Accordingly, the specific configuration of barrier 50 and the position of peripheral bond 53 may vary significantly within the scope of the present invention.

A variety of foam materials are suitable for tensile member 60. Thermoset polymer foams, including polyurethane and ethylvinylacetate, may be utilized with an adhesive or when the direct bond involves the melting or softening of barrier 50 such that the molten material extends into cavities formed by the foamed cells of tensile member 60. When both barrier 50 and tensile member 60 are formed of a thermoplastic polymer foam, the materials forming both components may be melted or softened such that the materials diffuse across a boundary layer between barrier 50 and tensile member 60 and are secured together upon cooling. Direct bonding may, therefore, occur between barrier 50 and tensile member 60 whether tensile member 60 is formed from a thermoset or thermoplastic polymer foam. Thermoplastic polymer foams also exhibit an advantage of having greater tear and shear properties than thermoset polymer foams, and thermoplastic polymer foams are reusable or recyclable.

With regard to thermoplastic polymer foams, one suitable material is manufactured by Huntsman International, L.L.C. under the SMARTLITE trademark. A suitable version of this thermoplastic polyurethane foam exhibits a density of 0.65 grams per cubic centimeter and a hardness of 57 on the Shore A scale. In further embodiments of the invention, a thermoplastic polyurethane foam exhibiting a density of 0.50 grams per cubic centimeter and a hardness of 85 on the Shore A scale may be utilized. Accordingly, the density and hardness of suitable polymer foams may vary significantly within the scope of the present invention. Another suitable material is produced through a process developed by Trexel, Incorporated and marketed under the MUCELL trademark. The process involves injecting a supercritical fluid, such as carbondioxide or nitrogen, into a thermoplastic polyurethane. A large number of nucleation sites are then formed in the thermoplastic polyurethane through a substantial and rapid pressure drop. The controlled growth of cells is achieved through monitoring of the pressure and temperature following the pressure drop, and the thermoplastic polyurethane is injected into a mold to form tensile member 60.

The fluid contained by bladder 40 may be any of the gasses disclosed in U.S. Patent Number 4,340,626 to Rudy, hereby incorporated by reference, such as hexafluoroethane and sulfur hexafluoride, for example. In addition, the fluid may include pressurized octafluorapropane, nitrogen, and air. The pressure of the fluid may range from a gauge pressure of zero to fifty pounds per square inch, for example.

With reference to Figure 1, bladder 40 is at least partially encapsulated by the polymer foam material of midsole 31. During walking, running, or other ambulatory activities, midsole 31 and bladder 40 are compressed between the heel of the foot and the ground, thereby attenuating ground reaction forces and absorbing energy (i.e., imparting cushioning). As discussed above, tensile member 60 is bonded to each of first barrier layer 51 and second barrier layer 52 and is placed in tension by the pressurized fluid. As bladder 40 is compressed between the heel and the foot, therefore, bladder 40 is compressed and the tension in tensile member 60 is relieved. Upon removal of the compressive force caused by the foot and the ground, the outward force induced by the fluid returns the tension in tensile member 60.

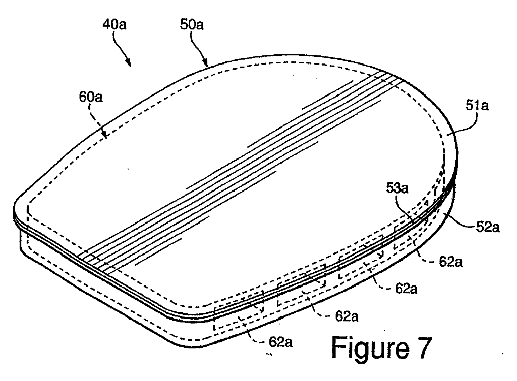

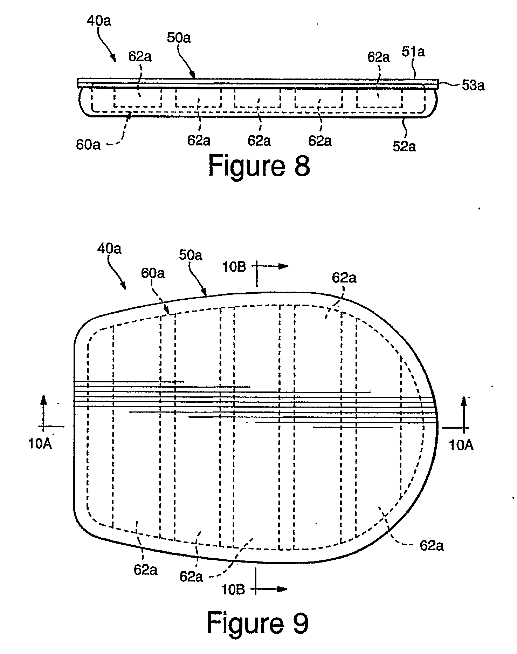

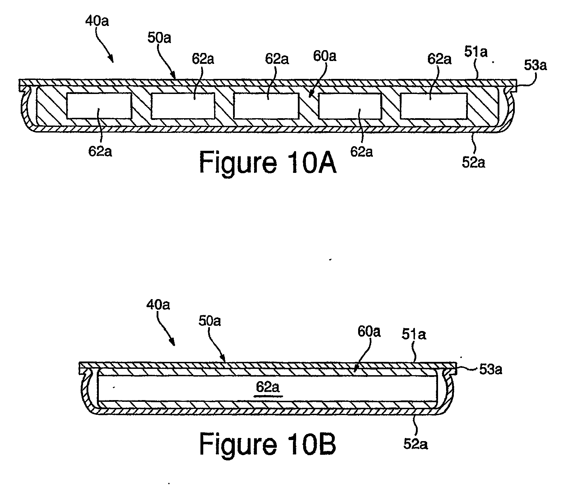

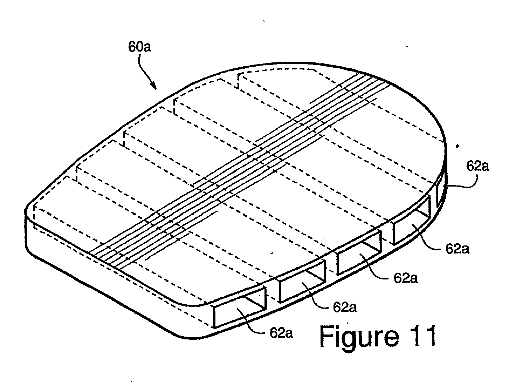

A bladder 40a is depicted in Figures 7-11 and has the general configuration of bladder 40, as discussed above. Accordingly, bladder 40a includes an outer barrier 50a and a tensile member 60a. Barrier 50a includes a first barrier layer 51a and a second barrier layer 52a that are substantially impermeable to a pressurized fluid contained by bladder 40a. First barrier layer 51a and second barrier layer 52a are bonded together around their respective peripheries to form a peripheral bond 53a and cooperatively form a sealed chamber, in which tensile member 60a and the pressurized fluid are located.

Tensile member 60a is a foam member that is bonded to each of first barrier layer 51a and second barrier layer 52a. The upper and lower surface of tensile member 60a are generally planar and parallel. In contrast with bladder 40, and more particularly tensile member 60, tensile member 60a defines five channels 62a that extend laterally through tensile member 60a. In further embodiments of the invention, the upper and lower surface of tensile member 60a may be non-planar and non-parallel, and the various channels 62a may extend longitudinally or both laterally and longitudinally through tensile member 60a.

The pressurized fluid contained by bladder 40a induces an outward force upon barrier 50a and tends to separate or otherwise press outward upon first barrier layer 51a and second barrier layer 52a. Tensile member 60a is placed in tension by the fluid and retains the generally flat configuration of bladder 40a that is depicted in the figures. As with bladder 40, direct bonding may be an effective manner of securing barrier 50a and tensile member 60a.

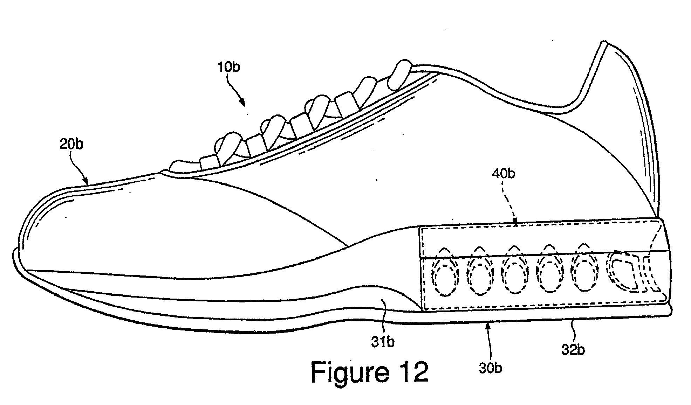

An article of footwear 10b is depicted in Figure 12 and includes an upper 20b and a sole structure 30b. Upper 20b has a substantially conventional configuration and includes a plurality elements, such as textiles, foam, and leather materials, that are stitched or adhesively bonded together to form an interior void for securely and comfortably receiving the foot. Sole structure 30b is positioned below upper 20b and includes two primary elements, a midsole 31b and an outsole 32b. Midsole 31b is secured to a lower surface of upper 20b, through stitching or adhesive bonding for example, and operates to attenuate forces and absorb energy as sole structure 30b impacts the ground.

Midsole 31b includes a bladder 40b that is positioned in a heel region of footwear 10b. A first surface of bladder 40b is secured to the lower surface of upper 20b, and an opposite second surface of bladder 40b is secured to outsole 32b. In contrast with bladder 40, therefore, bladder 40b may be separate from (i.e., not encapsulated by) the polymer foam material that forms other portions of midsole 31b. In further configurations, however, bladder 40b may be encapsulated within the polymer foam material that forms midsole 31b, or bladder 40b may extend through the longitudinal length of midsole 31b to support the entire length of the foot.

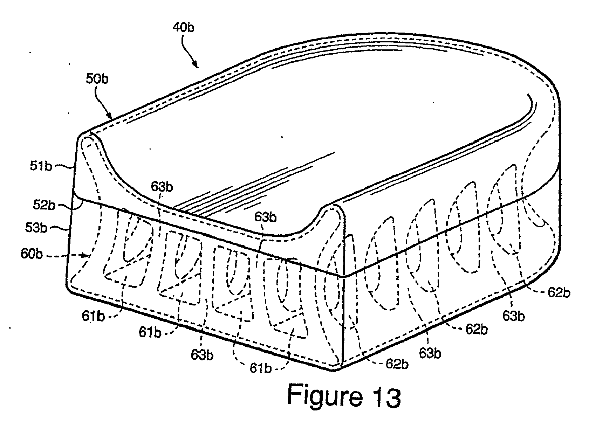

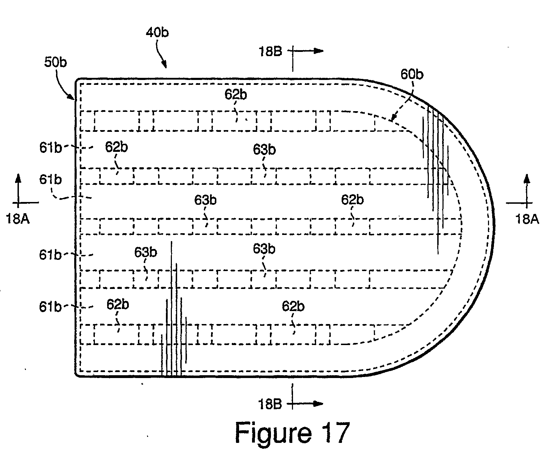

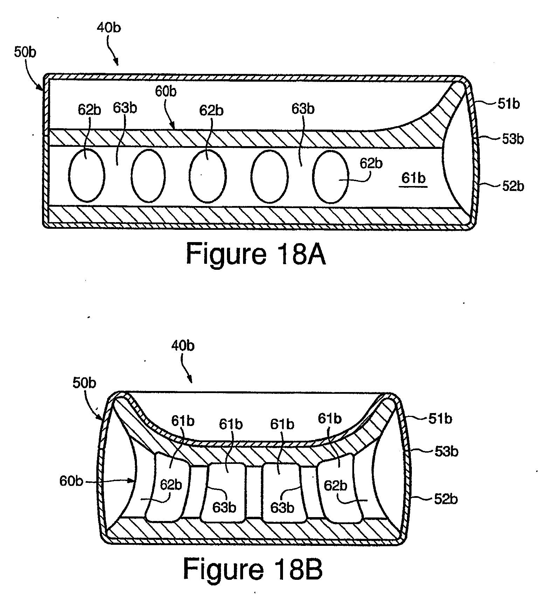

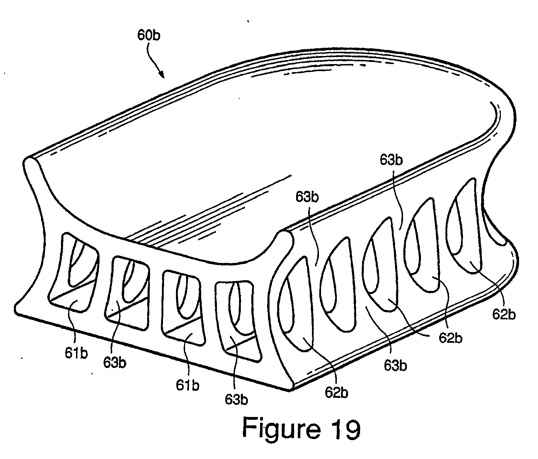

The primary elements of bladder 40b, as depicted in Figures 13-19, are an outer barrier 50b and a tensile member 60b. Barrier 50b includes a first barrier layer 51b and a second barrier layer 52b that are substantially impermeable to a pressurized fluid contained by bladder 40b. The pressurized fluid contained by bladder 40b induces an outward force upon barrier 50b and tends to separate or otherwise press outward upon first barrier layer 51b and second barrier layer 52b. Tensile member 60b, however, is bonded to each of first barrier layer 51b and second barrier layer 52b and is placed in tension by the pressurized fluid, thereby restraining outward movement of barrier 50b.

First barrier layer 51b and second barrier layer 52b are bonded together around their respective peripheries to form a peripheral bond 53b and cooperatively form a sealed chamber, in which tensile member 60b and the pressurized fluid are located. Suitable materials for barrier 50b include any of the materials discussed above with respect to barrier 50. Tensile member 60b is a polymer foam member that is bonded to barrier 50b. Although adhesive bonding may be utilized to secure barrier 50b and tensile member 60b, direct bonding may also be suitable when both barrier 50b and tensile member 60b are formed from thermoplastic polymers. Accordingly, the polymer foam material of tensile member 60b may be the thermoplastic polyurethane foam manufactured by Huntsman International, L.L.C. under the SMARTLITE trademark, or may also be the material produced through the process developed by Trexel, Incorporated and marketed under the MUCELL trademark. Other suitable foams, whether thermoplastic or thermoset, may be utilized for tensile member 60b.

Tensile member 60, as discussed above, has a configuration wherein the surfaces bonded to barrier 50 are both planar and parallel. In contrast, tensile member 60b includes an upper surface with a concave configuration, and tensile member 60b includes a lower surface that is generally planar. The concave configuration of the upper surface provides bladder 40b with a concave upper area that joins with upper 20 and forms a depression for securely receiving the heel of the wearer. Similarly, the planar lower surface provides bladder 40b with a generally planar configuration that joins with outsole 32b and forms a surface for contacting the ground. The various contours for the surfaces of tensile member 60b may vary significantly from the configuration discussed above. For example, the lower surface may incorporate a bevel in the rear-lateral corner of footwear 10, or both surfaces may be planar.

Whereas tensile member 60 extends continuously between opposite sides of barrier 50, tensile member 60b includes a plurality of intersecting channels 61b and 62b that extend through the polymer foam material. Channels 61b extend longitudinally from a front portion of tensile member 60b to a back portion of tensile member 60b. Similarly, channels 62b extend laterally between the sides of tensile member 60b. Channels 61b and 62b increase the compressibility of tensile member 60b and decrease the overall weight of bladder 40b. Although tensile member 60b is depicted as having four channels 61b and six channels 62b, any number of channels 61b and 62b are contemplated to fall within the scope of the present invention. In addition, channels 61b and 62b may extend only partially through tensile member 60b, rather than extending entirely through tensile member 60b.

Channels 61b and 62b remove portions of tensile member 60b and form a plurality of columns 63b that extend between upper and lower portions of tensile member 60b. The dimensions of columns 63b may vary significantly depending upon the quantity and dimensions of channels 61b and 62b. The dimensions of columns 63b have an effect upon the compressibility of bladder 40b, and one skilled in the relevant art may, therefore, balance various factors such as the pressure of the fluid and the dimensions of columns 63b to modify or otherwise select a suitable compressibility. Other factors that may affect the compressibility of bladder 40b include the density of the polymer foam material and the thickness of bladder 40b. The pressurized fluid within bladder 40b places tensile member 60b in tension. Although upper and lower portions of tensile member 60b are in tension, a majority of the tension is induced in columns 63b. The tension tends to stretch or otherwise elongate columns 63b. Accordingly, the dimensions of columns 63b may also be selected to limit the degree of elongation in columns 63b.

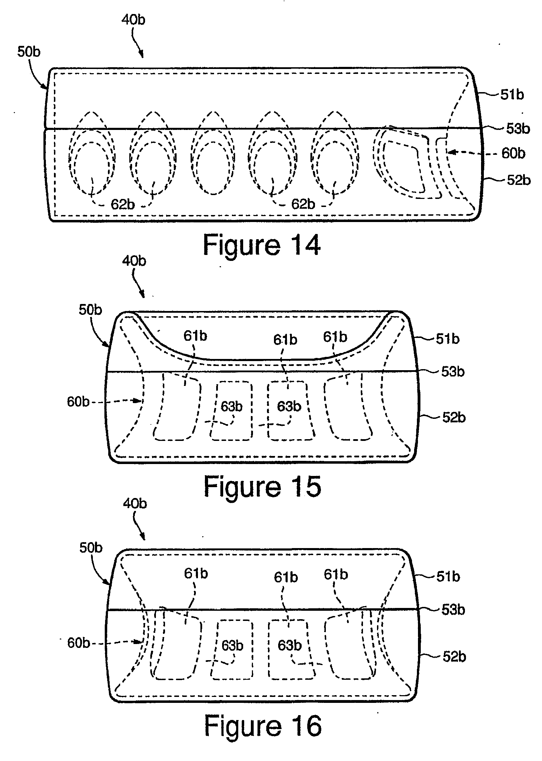

Channels 61b extend entirely along the longitudinal length of tensile member 40b and exhibit a shape that is generally rectangular, as depicted in Figures 15 and 16. Similarly, channels 62b extend entirely through the lateral width of tensile member 60b and exhibit a shape that is generally oval, as depicted in Figure 14. Although these are suitable shapes for channels 61b and 62b, the shapes of channels 61b and 62b may vary to include circular, triangular, hexagonal, or other regular or non-regular configurations. Channels 61b and 62b are also depicted as having a constant shape through the length and width of tensile member 60b, but may have a non-constant, varying shape or varying dimensions. Accordingly, the configurations of channels 61b and 62b may vary to impart different compressibilities or properties to different portions of tensile member 60b. For example, channels 61b and 62b may have greater dimensions in the rear-lateral portion of tensile member 60b in order to decrease the overall compressibility of sole structure 30b in the rear-lateral corner.

The upper and lower surfaces of tensile member 60b are bonded to barrier 50b. The side surfaces of tensile member 60b may, however, remain unbonded to barrier 50b. The sidewalls of bladder 40b may bulge or otherwise protrude outward due to the pressure of the fluid within bladder 40b. In some embodiments, the side surfaces of tensile member 60b may be entirely or partially bonded to barrier 50b.

Tensile member 60b may be formed through an injection molding process wherein the polymer foam is injected into a mold having a void with the general shape of tensile member 60b. Various removable rods may extend through the void in locations that correspond with the positions of channels 61b and 62b. Upon at least partial curing of the polymer foam, the rods may be removed and the mold may be opened to permit removal of tensile member 60b.

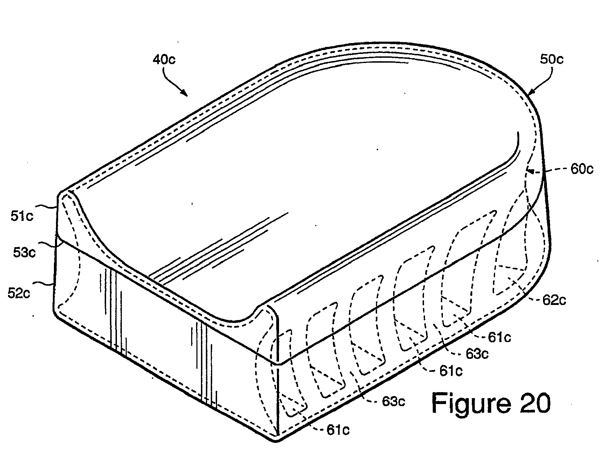

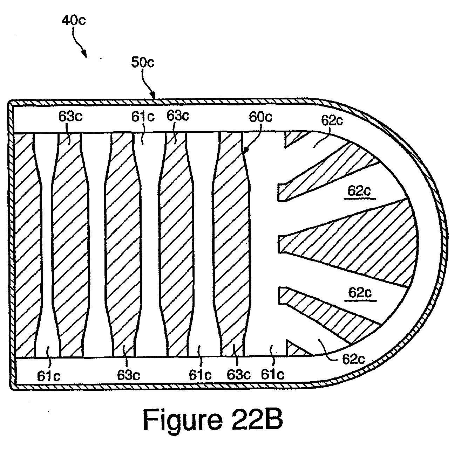

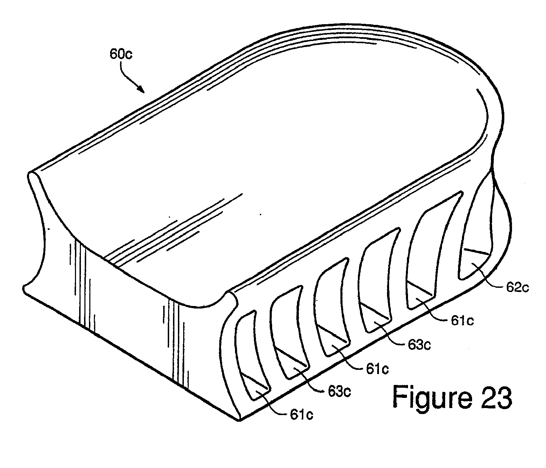

With reference to Figures 20-23, another bladder 40c is depicted as including an outer barrier 50c and a tensile member 60c. As with the prior embodiments, barrier 50c includes a first barrier layer 51c and a second barrier layer 52c that are substantially impermeable to a pressurized fluid contained by bladder 40c. The pressurized fluid contained by bladder 40c induces an outward force upon barrier 50c and tends to separate or otherwise press outward upon first barrier layer 51c and second barrier layer 52c. Tensile member 60c, however, is bonded to each of first barrier layer 51c and second barrier layer 52c and is placed in tension by the pressurized fluid, thereby restraining outward movement of barrier 50c.

First barrier layer 51c and second barrier layer 52c are bonded together around their respective peripheries to form a peripheral bond 53c and cooperatively form a sealed chamber, in which tensile member 60c and the pressurized fluid are located. Suitable materials for barrier 50c include any of the materials discussed above with respect to barrier 50. Tensile member 60c is a polymer foam member that is bonded to barrier 50c. Although adhesive bonding may be utilized to secure barrier 50c and tensile member 60c, direct bonding may also be suitable when both barrier 50c and tensile member 60c are formed from thermoplastic polymers. Accordingly, the polymer foam material of tensile member 60c may be the thermoplastic polyurethane foam manufactured by Huntsman International, L.L.C. under the SMARTLITE trademark, or may also be the material produced through the process developed by Trexel, Incorporated and marketed under the MUCELL trademark. Other suitable foams, whether thermoplastic or thermoset, may be utilized for tensile member 60c.

Tensile member 60c includes an upper surface with a concave configuration, and tensile member 60c includes a lower surface that is generally planar. The concave configuration of the upper surface provides bladder 40c with a concave upper area that joins with an upper and forms a depression for securely receiving the heel of the wearer. Similarly, the planar lower surface provides bladder 40c with a generally planar configuration that joins with an outsole and forms a surface for contacting the ground. The various contours for the surfaces of tensile member 60c may, however, vary significantly from the configuration discussed above.

Tensile member 60c includes a plurality of channels 61c and 62c that extend through or at least partially into the polymer foam material and form columns 63c that extend between upper and lower portions of tensile member 60c. Channels 61c extend laterally between the sides of tensile member 60c. Channels 62c extend into the polymer foam material in the rear portion and form a radial configuration. That is, channels 62c extend into the polymer foam material around the semi-circular rear portion of tensile member 60c, and channels 62c intersect the rear-most channel 61c. In contrast with tensile member 60b, tensile member 60c is not depicted as having channels that extend longitudinally, but may have longitudinal channels in further embodiments. Channels 61c and 62c increase the compressibility of tensile member 60c and decrease the overall weight of bladder 40c.

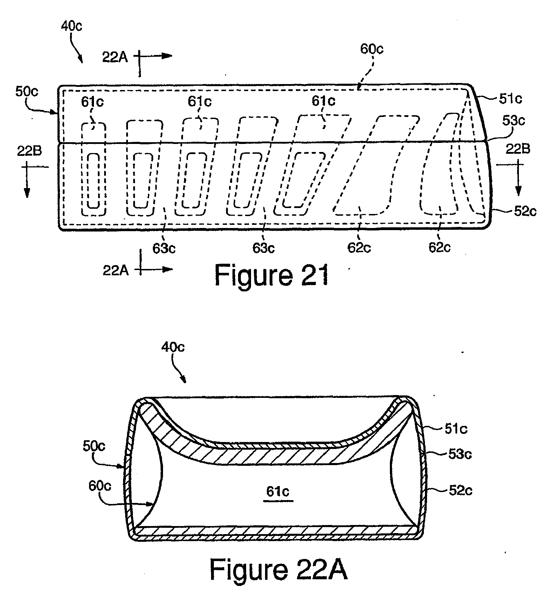

Channels 61c and 62c are configured to selectively increase or vary the compressibility of tensile member 60c in different areas. Referring to Figure 21, the channel 61c in a front area of tensile member 60c is vertically-oriented. Subsequent channels 61c, however, become increasingly diagonal or otherwise non-vertical as channels 61c extend rearward. In addition, the various columns 63c also tend to become more non-vertical in the rear area than in the front area. In compression, vertical columns 63c will generally provide greater support than non-vertical or diagonal columns 63c. Accordingly, the orientation of channels 63c may be utilized to affect or otherwise configure the compressibility of bladder 40c in various areas. Furthermore, channels 62c may also exhibit a non-vertical orientation to further increase the compressibility of bladder 40c in the rear area.

The upper and lower surfaces of tensile member 60c are bonded to barrier 50c. The side surfaces of tensile member 60c may, however, remain unbonded to barrier 50c. The sidewalls of bladder 40c may bulge or otherwise protrude outward due to the pressure of the fluid within bladder 40c. In some embodiments, the side surfaces of tensile member 60c may be entirely or partially bonded to barrier 50c.

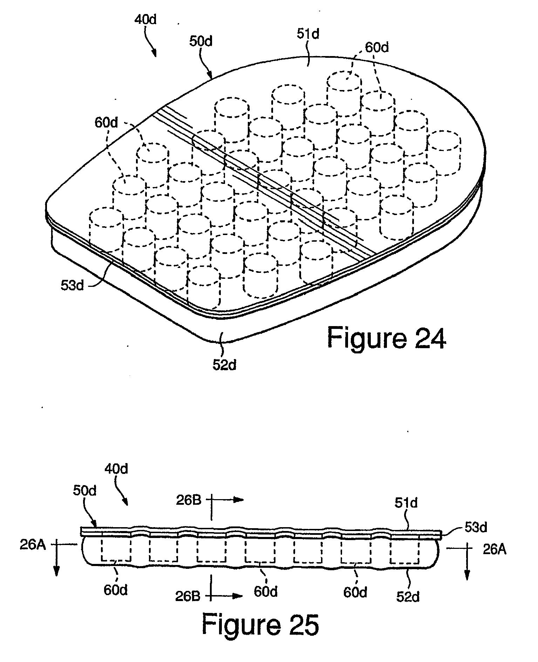

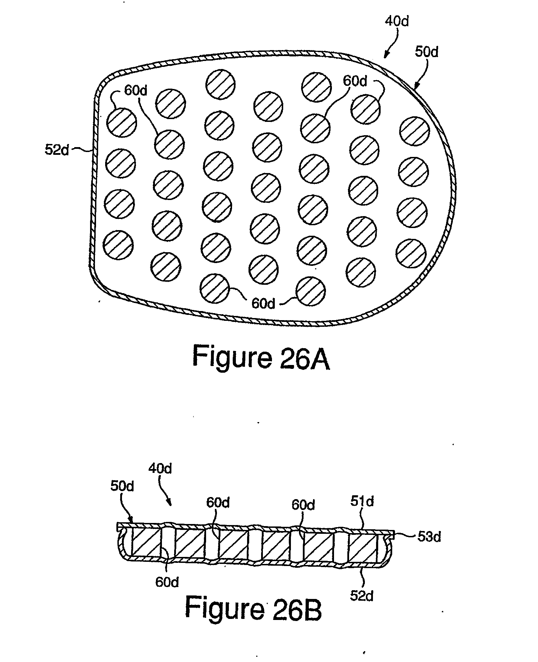

With reference to Figures 24-26B, a bladder 40d is depicted as including an outer barrier 50d and a plurality of tensile members 60d. Barrier 50d includes a first barrier layer 51d and a second barrier layer 52d that are substantially impermeable to a pressurized fluid contained by bladder 40d. First barrier layer 51d and second barrier layer 52d are bonded together around their respective peripheries to form a peripheral bond 53d and cooperatively form a sealed chamber, in which tensile members 60d and the pressurized fluid are located.

Tensile members 60d are a plurality of discrete foam members, which may have the configuration of columns, that are bonded to each of first barrier layer 51d and second barrier layer 52d. Tensile member 60d are depicted as having generally uniform dimensions, but may have different dimensions, such as height and thickness, within the scope of the present invention. The upper and lower surface of tensile members 60d are generally planar and parallel, but may also be contoured to provide a shape to bladder 40d.

The pressurized fluid contained by bladder 40d induces an outward force upon barrier 50d and tends to separate or otherwise press outward upon first barrier layer 51d and second barrier layer 52d. Tensile members 60d are each placed in tension by the fluid and retain the generally flat configuration of bladder 40d that is depicted in the figures. As with bladder 40, direct bonding may be an effective manner of securing barrier 50d and tensile members 60d.

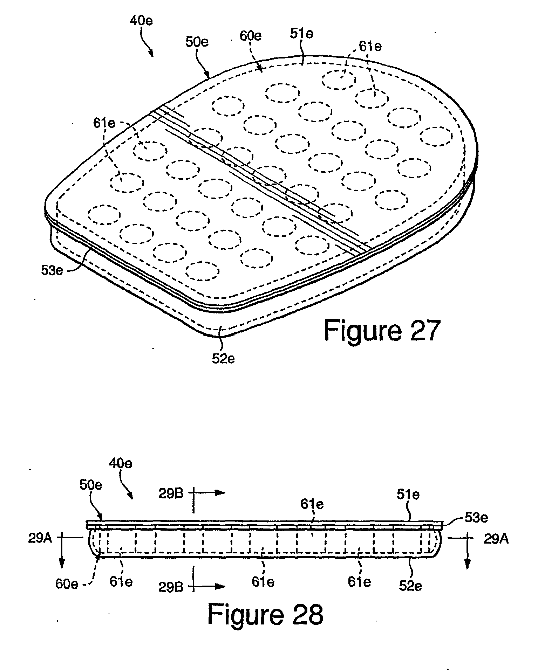

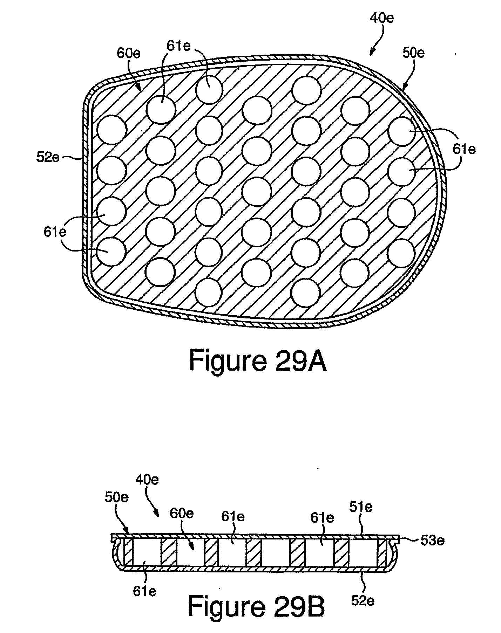

A bladder 40e is depicted in Figures 27-29A and has the general configuration of bladder 40, as discussed above. Accordingly, bladder 40e includes an outer barrier 50e and a tensile member 60e. Barrier 50e includes a first barrier layer 51e and a second barrier layer 52e that are substantially impermeable to a pressurized fluid contained by bladder 40e. First barrier layer 51e and second barrier layer 52e are bonded together around their respective peripheries to form a peripheral bond 53e and cooperatively form a sealed chamber, in which tensile member 60e and the pressurized fluid are located.

Tensile member 60e is a foam member that is bonded to each of first barrier layer 51e and second barrier layer 52e. The upper and lower surface of tensile member 60e are generally planar and parallel, but may also be contoured. In contrast with bladder 40, and more particularly tensile member 60, tensile member 60e defines a plurality of channels 61 e that extend vertically through tensile member 60e.

The pressurized fluid contained by bladder 40e induces an outward force upon barrier 50e and tends to separate or otherwise press outward upon first barrier layer 51e and second barrier layer 52e. Tensile member 60e is placed in tension by the fluid and retains the generally flat configuration of bladder 40e that is depicted in the figures. As with bladder 40, direct bonding may be an effective manner of securing barrier 50e and tensile member 60e.

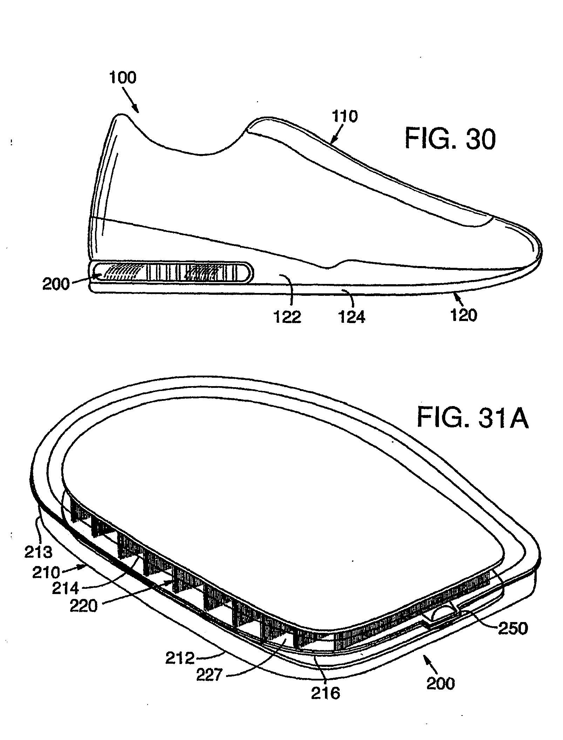

An article of footwear 100 is depicted in Figure 30 and includes an upper 110 and a sole structure 120. Upper 110 is configured to receive a foot of a wearer. Sole structure 120, which provides a durable, shock-absorbing medium located between the foot and the ground, is primarily formed of a midsole 122 and an outsole 124. A bladder 200, formed in accordance with the method disclosed below, is secured in the heel area of midsole 122 and above outsole 124. As depicted in Figure 30, article of footwear 100 is an athletic shoe. Bladder 200 may, however, be utilized in other types of footwear, including dress shoes, sandals, in-line skates, and boots.

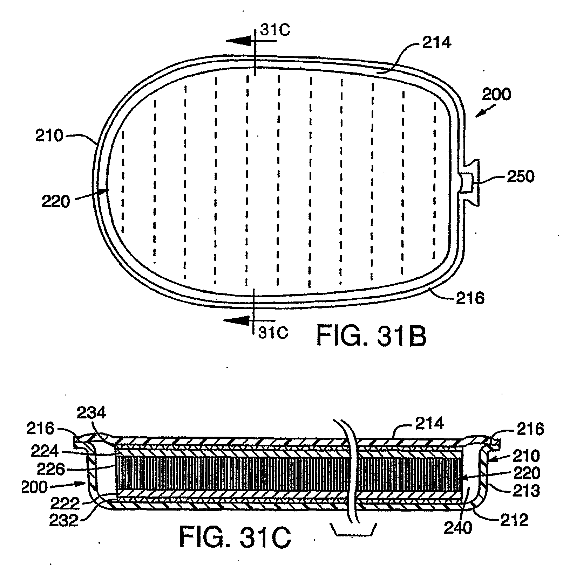

Bladder 200, depicted in Figure 31A-31C, includes an outer enclosing member 210, an inner core 220, a pair of coupling layers 232 and 234, a fluid 240, and an inlet 250. Outer enclosing member 210 is formed of a first sheet 212 and a second sheet 214 that are joined to form a peripheral bond 216. The material forming sheets 212 and 214 may be any of the various materials for barrier 50 that are discussed above. A suitable thickness range for first sheet 212 is 30 to 60 mils, with one preferred thickness being 50 mils, and a suitable thickness range for second sheet 214 is 20 to 45 mils, with one preferred thickness being 30 mils. Other suitable thicknesses for sheets 212 and 214 may also be utilized. As illustrated in Figure 31A-31C, first sheet 212 and second sheet 214 are integrally formed around core 220 by a method in accordance with the present invention, described in detail below. The material forming first sheet 212 may be configured such that core 220 is visible through sidewall 213. First sheet 212 may, therefore, be transparent, translucent, clear, or colored, to facilitate the visibility of core 220.

Core 220 may be formed of a double-walled fabric member that includes a first outer layer 222 and a second outer layer 224 which are normally spaced apart from one another at a predetermined distance. Although core thickness may vary, a thickness range suitable for footwear applications may range from 8 to 15 millimeters, one suitable thickness being approximately 14.5 to 15 millimeters. A plurality of connecting members 226, comprised of drop yarns that include multiple filaments, extend between outer layers 222 and 224. The drop yarn filaments form tensile restraining members and are anchored to outer layers 222 and 224. One method of manufacturing core 220 is double needle bar Raschel knitting. Outer layers 222 and 224 may be formed of air-bulked or otherwise texturized yarn, such as false twist texturized yarn, particularly a combination of Nylon 6, 6 and Nylon 6. Connecting members 226 may be formed of a similar material.

The plurality of yarns comprising connecting members 226 may be arranged in bands that are separated by gaps 227. The use of gaps 227 provides core 220 with increased compressibility in comparison to cores formed of double-walled fabrics that utilize continuous connecting yarns. Connecting members 226 and gaps 227 also have the potential to provide an appealing appearance when viewed through sidewall 213. Gaps 227 are formed during the double needle bar Raschel knitting process by omitting connecting yarns on certain predetermined needles in the warp (wale) direction. Knitting with three needles in and three needles out produces a suitable fabric with connecting members 226 being separated by gaps 227. Other knitting patterns of needles in and needles out can be used, such as two in and two out, four in and two out, two in and four out, or any combination thereof. Also, gaps may be formed in both a longitudinal and transverse direction by omitting needles in the warp direction or selectively knitting or not knitting on consecutive courses.

In order to facilitate the bonding of first outer layer 222 to first sheet 212, first coupling layer 232 may be disposed therebetween. Similarly, second coupling layer 234 may be disposed between second outer layer 224 and second sheet 214. Coupling layers 232 and 234, which may be formed of the same thermoplastic material as sheets 212 and 214, are applied to outer layers 222 and. 224 such that coupling layers 232 and 234 penetrate a portion of each coupling layer 232 and 234 without adhering to connecting members 226. The application of coupling layers 232 and 234 to outer layers 222 and 224 may be achieved by compressing the materials at 5 psi between upper and lower heated platens of a 250 degree Fahrenheit press for approximately 5 seconds. This method and other suitable methods of applying the coupling material to the fabric layers are discussed in detail in the 361 Rudy patent.

Bladder 200 contains a fluid 240, such as nitrogen. Other suitable gasses include hexafluorethane (e.g., Freon, F-116), sulphurhexafluoride, air, and the various gasses discussed above as being suitable for the fluid contained by bladder 40 or bladders 40a-40e.

The overall manufacturing process for bladder 200 generally includes the steps of preparation, heating, bonding, and inflation. A shuttle mechanism, or other transfer mechanism, may be used to transport the components of bladder 200 between the various steps of the manufacturing process. The shuttle mechanism may include a shuttle frame, various clamps that secure bladder components to the shuttle frame, and a spacer that prevents sheets 212 and 214 from prematurely contacting during the heating step. In an alternate embodiment, the spacer may be replaced by a fluid layer having a pressure of 2 to 5 psi that prevents contact. In general, the components of bladder 200 are organized, assembled, and secured to the shuttle frame during the preparation steps. Once prepared, the bladder components are transported into an oven where they are heated for a predetermined time so as to reach a desired temperature. The shuttle mechanism then transports the components to a mold 300 where sheets 212 and 214 are securely bonded to core 220. Sheets 212 and 214 are then bonded to each other to form peripheral bond 216 at an elevation that approximately corresponds with the elevation of second sheet 214. Following bonding, the components are removed from the shuttle frame, permitted to cool, and inflated to a desired pressure.

A portion of the preparation steps and the bonding steps may both occur in the area of mold 300. As such, bladder components may be arranged and secured to the shuttle frame in the area of mold 300 and then transported to the oven for heating. Following heating, the materials exit the oven and return to the area of mold 300 for purposes of bonding. The advantage of this configuration is that a single individual may oversee preparation, heating, and bonding. Furthermore, when bonding is complete, the shuttle frame is correctly positioned for a subsequent cycle, thereby increasing process efficiency. Specifics regarding the manufacturing method of the present invention are detailed in the following material.

The manufacturing process is initiated by pre-tacking core 220 to first sheet 212. This may be achieved by positioning core 220 on first sheet 212 and compressing core 220 and first sheet 212 between platens of a heated press such that first sheet 212 bonds with first coupling layer 232. Pre-tacking ensures that core 220 is properly positioned on first sheet 212 for the molding process, as detailed below. Note that coupling layer 234 was previously applied to outer layer 224, as described above, but not pre-tacked to second sheet 214.

When pre-tacking is complete, first sheet 212, core 220, and second sheet 214 are positioned in the shuttle frame such that core 220 is located between sheets 212 and 214. In order to prevent contact between sheets 212 and 214, the spacer is located between sheets 212 and 214. An inflation needle may also be positioned between sheets 212 and 214. Clamps located on the shuttle frame may be closed in order to ensure secure positioning of sheets 212 and 214, core 220, and the inflation needle.

The shuttle frame then transports the components of bladder 200 into the oven which can be any conventional oven capable of heating the thermoplastic material to an appropriate temperature for thermoforming. A typical oven may include a quartz-type radiant heater evenly raises the temperature of sheets 212 and 214. For reasons which will become apparent below, the thickness of first sheet 212 may be greater than that of second sheet 214. To ensure equal heating, the relative output of the heating elements that correspond with first sheet 212 and those that correspond with second sheet 214 may be adjusted accordingly.

The temperature to which sheets 212 and 214 are heated depends upon the specific material used. The material should be heated to a degree that exceeds the softening temperature, but is below the melting point, to ensure proper bonding. As noted above, sheets 212 and 214 may be formed from a variety of materials. A first suitable material includes alternating layers of thermoplastic polyurethane and ethylene-vinyl alcohol copolymer, which has a melting temperature between 350 and 360 degrees Fahrenheit. The temperature to which the first material should be heated is, therefore, between 300 and 320 degrees Fahrenheit. A second suitable material is formed of a flexible microlayer membrane that includes alternating layers of a gas barrier material and an elastomeric material, such as thermoplastic polyurethane, which also has a melting temperature in the range of 350 to 360 degrees Fahrenheit. A suitable temperature to which the second material may be heated is, however, between 320 and 335 degrees Fahrenheit. Following heating, the shuttle frame transports the components out of the oven and positions the components between a lower mold portion 310 and an upper mold portion 350 of mold 300.

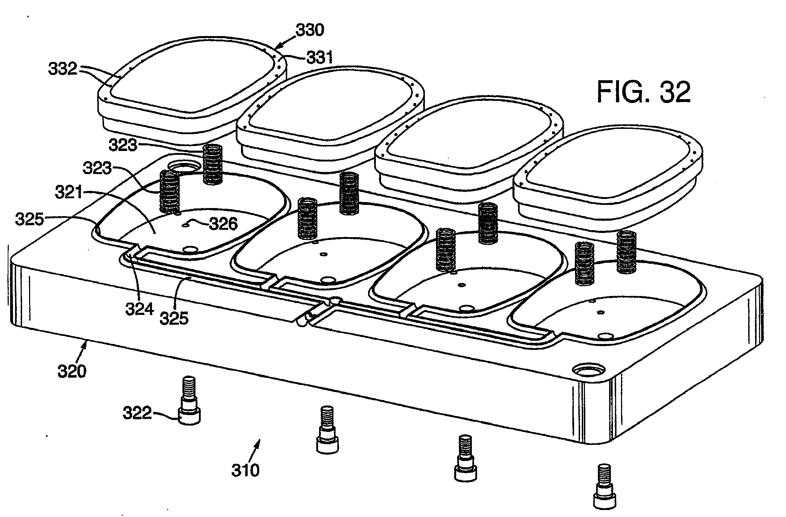

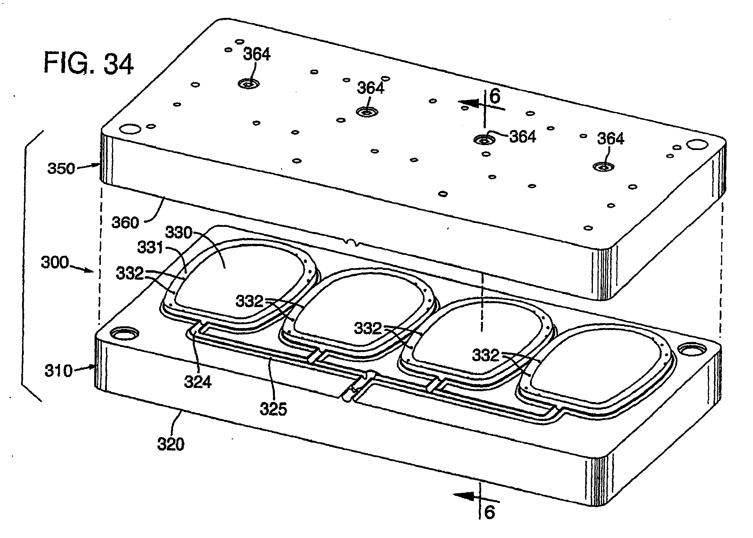

Figure 32-34 depict mold 300 as having a configuration wherein four bladders 200 may be simultaneously manufactured. The present manufacturing process may be utilized to simultaneously manufacture any number of bladders 200 and is not limited to the number depicted. Lower mold portion 310, depicted individually in Figure 32 and with upper mold portion 350 in Figure 34-35C, includes a lower plate 320 and a lower insert 330. A cavity 321 is formed in the upper surface of lower plate 320 and is properly dimensioned to receive lower insert 330. The lower surface of cavity 321 includes one or more vacuum ports 326. In addition to cavity 321, the upper surface of lower plate 321 includes a shallow, semi-circular channel 324 that extends from cavity 321 and a raised ridge 325 that extends along both sides of channel 324 and around cavity 321.

Lower insert 330 is secured within cavity 321 by shoulder screw 322 and rests upon two die springs 323 such that a portion of lower insert 330 remains positioned above the upper surface of lower plate 320 when no downward forces are applied. When a downward force is applied, however, die springs 323 compress and lower insert 330 retreats into cavity 321. The upper surface of lower insert 330 includes a perimeter indentation 331 that circumscribes the edge of lower insert 330. A series of apertures 332 are formed in perimeter indentation 331 that extend downward and through lower insert 330, thereby placing perimeter indentation 331 in fluid communication with cavity 321. As will be described below, perimeter indentation 331 is primarily responsible for forming sidewall 213. Accordingly, characteristics of perimeter indentation 331, including the length of the arc that forms the surface of perimeter indentation 331, should be selected to provide a sidewall height that locates peripheral bond 216 substantially on the plane of second sheet 214.

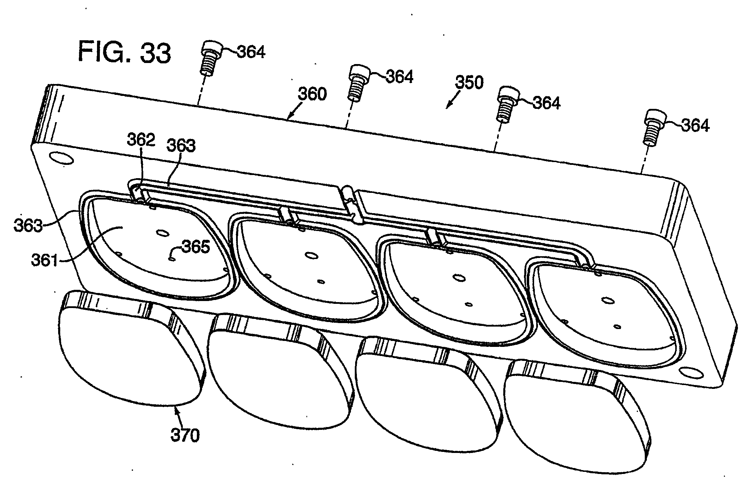

Upper mold portion 350, depicted individually in Figure 33 and with lower mold portion 310 in Figure 34-35C, is designed to correspond with the various elements of lower mold portion 310. Upper mold portion 350 includes an upper plate 360 and an upper insert 370. Upper plate 360 includes a cavity 361, a channel 362 that corresponds with channel 324 of lower plate 310, and a ridge 363 that lies adjacent to cavity 361 and channel 362. Upper insert 370 is secured within cavity 361 with a screw 364 such that the lower surface of upper insert 370 coincides with ridge 363. Note that upper insert 370 is stationary with respect to upper plate 360. Like lower plate 320, upper plate 360 includes vacuum ports 365.

When mold 300 is closed, corresponding portions of lower mold portion 310 and upper mold portion 350 are located adjacent to each other. For example, lower insert 330 and upper insert 370 will be located such that portions of lower insert 330 are located directly underneath corresponding portions of upper insert 370. Likewise, ridges 325 and 363 will be located such that a cylindrical space, formed by channels 324 and 362, is located between plates 320 and 360.

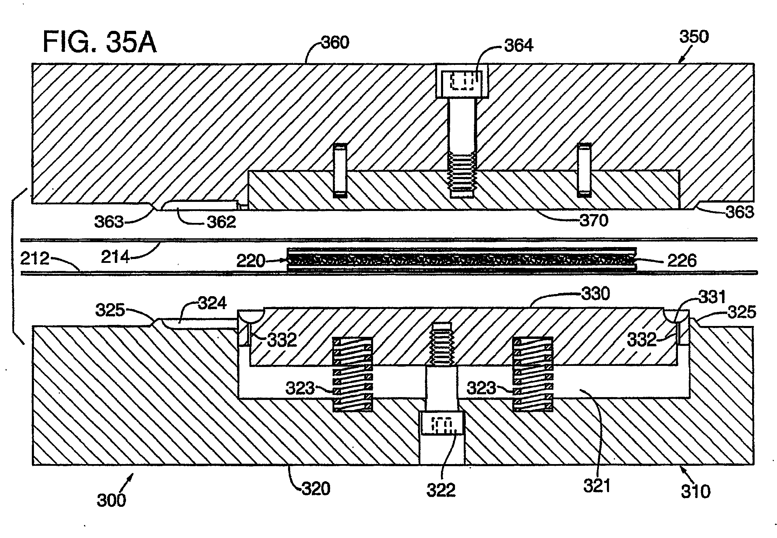

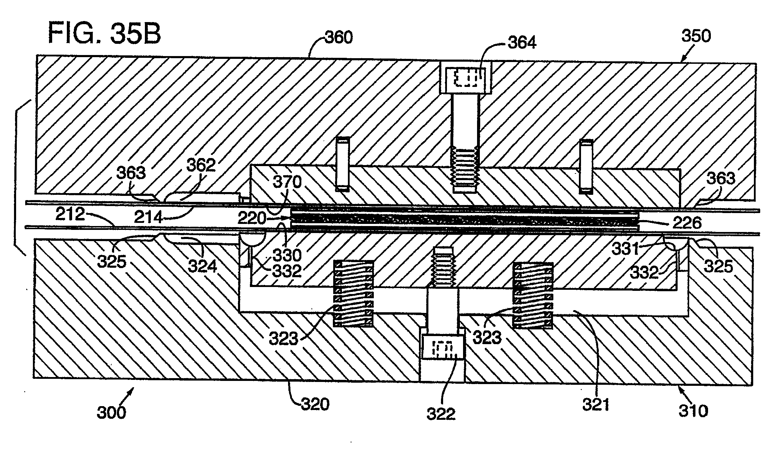

If a shuttle frame is used, the shuttle frame properly positions the first sheet 212, second sheet 214, core 220, and coupling layers 230 between portions of mold 300, as depicted in Figure 35A. Note that connecting members 226, in Figure 35A, are depicted in a non-extended state. Lower mold portion 310 and upper mold portion 350 begin to close upon the components such that lower insert 330 contacts first sheet 212 in the area where first outer layer 222 is pre-tacked to first sheet 212 and upper insert 370 contacts second sheet 214 in the area of second outer layer 224, thereby compressing the components between inserts 330 and 370, as depicted in Figure 35B. The compressive force of inserts 330 and 370, coupled with the elevated temperature of the compressed components, permanently bonds coupling layers 232 and 234 to sheets 212 and 214, respectively. In this manner, core 220 is effectively bonded to sheets 212 and 214.

Following bonding of the core, a vacuum in the range of 28 to 29.5 inches of mercury, for example, may be formed in perimeter indentation 331 and around the perimeters of inserts 330 and 370 by evacuating air through vacuum ports 326 and 365. As noted, perimeter indentation 331 includes apertures 332. When cavity 321 is evacuated by drawing air through vacuum port 326, air located within perimeter indentation 331 passes through apertures 332 and into cavity 321. In addition, air located around the perimeter of lower insert 330 is evacuated by passing through a gap between lower insert 330 and the sides of cavity 321. A similar process forms a vacuum around the perimeter of upper insert 370.

The purpose of the vacuum is to draw sheets 212 and 214 into contact with the various portions of mold 300. This ensures that sheets 212 and 214 are properly shaped in accordance with the contours of mold 300. As discussed above, perimeter indentation 331 is primarily responsible for shaping sidewall 213 and should be configured such that sidewall 213 has sufficient height to locate peripheral bond 216 on the plane of second sheet 214. If sidewall 213 is not properly formed, peripheral bond 216 may be improperly located. Note that first sheet 212 may stretch in order to extend into perimeter indentation 331 and form sidewall 213. Differences between the original thicknesses of sheets 212 and 214, as noted above, compensate for thinning in first sheet 212 that may occur when first sheet 212 is stretched and drawn into perimeter indentation 331.

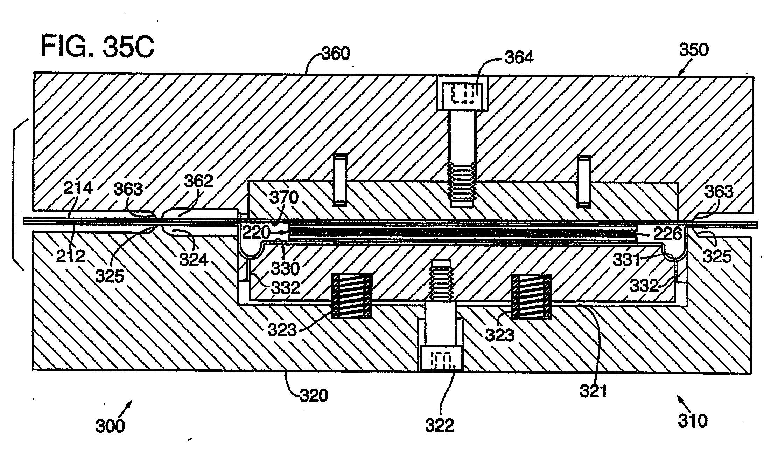

In order to provide a second means for drawing sheets 212 and 214 into contact with the various portions of mold 300, the internal area of core 220 may be pressurized to approximately 60 psi. During the preparatory stage of this method, an injection needle was located between sheets 212 and 214. Advantageously, the injection needle may be located such that channels 324 and 362 envelop the injection needle when mold 300 closes. A gas may then be ejected from the injection needle such that sheets 212 and 214 engage the surface of channels 324 and 362, thereby forming an inflation conduit between sheets 212 and 214. The gas may then pass through the inflation conduit, thereby entering and pressurizing the area of core 220. In combination with the vacuum, the internal pressure ensures that sheets 212 and 214 contact the various portions of mold 300, as depicted in Figure 35C.

As mold 300 closes further, ridges 325 and 363 bond first sheet 212 to second sheet 214, thereby forming peripheral bond 216. Furthermore, portions of ridges 325 and 363 that bound channels 324 and 362 form a bond between sheets 212 and 214 that forms the inflation conduit noted above.

Throughout the various stages of the bonding operation, as described above, the position of lower insert 330 changes with respect to cavity 321. Initially, the upper surface of lower insert 330 extends above ridge 325, as depicted in Figure 35A. During the portion of the bonding operation that bonds coupling layers 232 and 234 to sheets 212 and 214, respectively, lower insert 330 partially retreats into cavity 321. Accordingly, die springs 323 partially deflect and press upward, thereby placing sheets 212 and 214, core 220, and coupling layers 230 under compression, as depicted in Figure 35B. Mold 300 then continues to close and lower insert 330 retreats fully within cavity 321, as depicted in Figure 35C. In this position, peripheral bond 216 is formed due to the compression of sheets 212 and 214 between ridges 325 and 363. As noted above, sidewall 213 is also formed at this stage by drawing first sheet 212 into perimeter indentation 331.

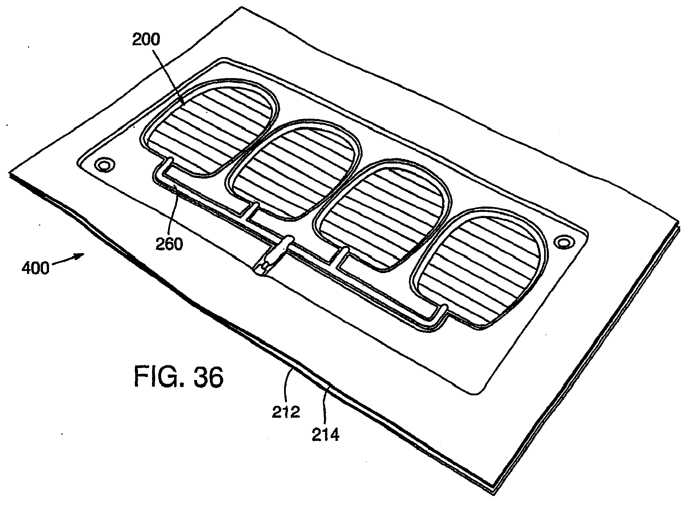

When bonding is complete, mold 300 is opened and a bonded component 400, as illustrated in Figure 36, is removed and permitted to cool. Although the temperature of sheets 212 and 214 were between 300 and 320 degrees Fahrenheit following heating, cooling reduces the temperature to between 140 and 150 degrees Fahrenheit upon removal from the mold. Following further cooling, fluid 240 may be injected into the area of core 220 through the inflation needle and inflation conduit. With reference to Figure 36, the inflation conduit is depicted as 260. Inlet 250 is then sealed through further bonding of first sheet 212 with second sheet 214. Excess portions of first sheet 212 and second sheet 214 are then removed, thereby forming bladder 200. As an alternative, the order of inflation and removal of excess material may be reversed. As a final step in the process, bladder 200 may be incorporated into the sole of an article of footwear in a conventional manner.

The above material discloses various fluid-filled bladders 40 and 40a-40e that respectively include a foam tensile member 60 and 60a-60e, which effectively form cores of bladders 40 and 40a-40e. Similarly, the above material also discloses a method of thermoforming a bladder 200 that includes a textile core 220. The general method of thermoforming bladder 200 may also be utilized to thermoform any of bladders 40 and 40a-40e. In other words, the thermoforming method may be utilized to thermoform a bladder with a foam core.

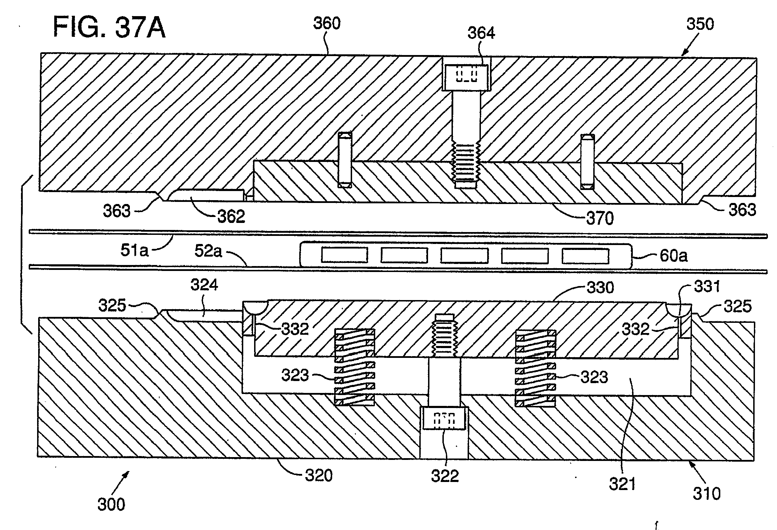

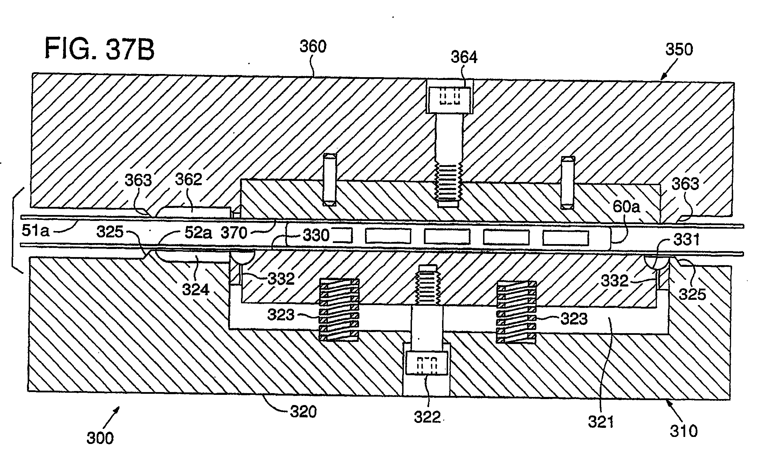

With reference to Figures 37A-37C the general method of thermoforming a bladder with a foam core will be discussed. For purposes of example, Figures 37A-37C depict the method as being applied to bladder 40a. One skilled in the relevant art will recognize, however, that the method may be applied to any of bladders 40 and 40a-40e. If a shuttle frame is used, the shuttle frame properly positions first barrier layer 51a, second barrier layer 52a, and tensile member 60a between portions of mold 300, as depicted in Figure 35A. Lower mold portion 310 and upper mold portion 350 begin to close upon the components such that lower insert 330 contacts second barrier layer 52a in the area of tensile member 60a and upper insert 370 contacts first barrier layer 51a in the area of tensile member 60a, thereby compressing the components between inserts 330 and 370, as depicted in Figure 37B. The compressive force of inserts 330 and 370, coupled with the elevated temperature of the compressed components, permanently bonds tensile member 60a to layers 51a and 52a, respectively.

Following bonding of tensile member 60a to layers 51a and 52a, a vacuum in the range of 28 to 29.5 inches of mercury, for example, may be formed in perimeter indentation 331 and around the perimeters of inserts 330 and 370 by evacuating air through vacuum ports 326 and 365. As noted, perimeter indentation 331 includes apertures 332. When cavity 321 is evacuated by drawing air through vacuum port 326, air located within perimeter indentation 331 passes through apertures 332 and into cavity 321. In addition, air located around the perimeter of lower insert 330 is evacuated by passing through a gap between lower insert 330 and the sides of cavity 321. A similar process forms a vacuum around the perimeter of upper insert 370.

The purpose of the vacuum is to draw layers 51a and 52a into contact with the various portions of mold 300. This ensures that layers 51a and 52a are properly shaped in accordance with the contours of mold 300. As discussed above, perimeter indentation 331 is primarily responsible for shaping the sidewall of bladder 40a and should be configured such that the sidewall of bladder 40a has sufficient height to locate peripheral bond 216 on the plane of second barrier layer 52a. If the sidewall of bladder 40a is not properly formed, peripheral bond 53a may be improperly located. Note that second barrier layer 52a may stretch in order to extend into perimeter indentation 331 and form the sidewall of bladder 40a. Differences between the original thicknesses of layers 51a and 52a, as noted above, compensate for thinning in first barrier layer 51a that may occur when second barrier layer 52a is stretched and drawn into perimeter indentation 331.

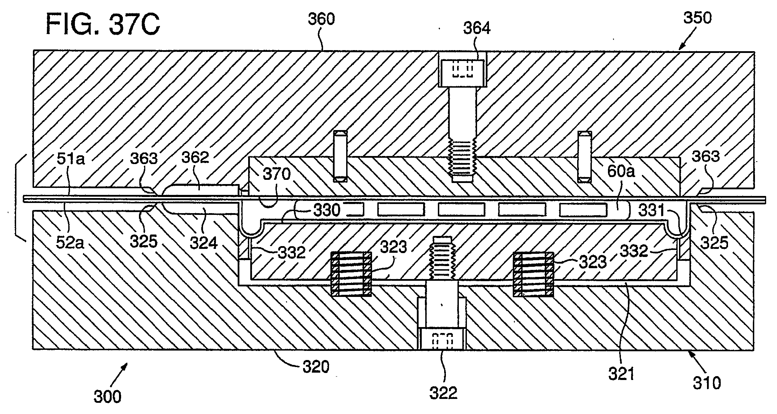

In order to provide a second means for drawing layers 51a and 52a into contact with the various portions of mold 300, the internal area of tensile member 60a may be pressurized to approximately 60 psi. During the preparatory stage of this method, an injection needle may be located between layers 51a and 52a. Advantageously, the injection needle may be located such that channels 324 and 362 envelop the injection needle when mold 300 closes. A gas may then be ejected from the injection needle such that layers 51a and 52a engage the surface of channels 324 and 362, thereby forming an inflation conduit between layers 51a and 52a. The gas may then pass through the inflation conduit, thereby entering and pressurizing the area of tensile member 60a. In combination with the vacuum, the internal pressure ensures that layers 51 a and 52a contact the various portions of mold 300, as depicted in Figure 37C.

As mold 300 closes further, ridges 325 and 363 bond first barrier layer 51a to second barrier layer 52a, thereby forming peripheral bond 53a. Furthermore, portions of ridges 325 and 363 that bound channels 324 and 362 form a bond between other areas of layers 51a and 52a to form an inflation conduit.

Throughout the various stages of the bonding operation, as described above, the position of lower insert 330 changes with respect to cavity 321. Initially, the upper surface of lower insert 330 extends above ridge 325, as depicted in Figure 37A. During a later portion of the bonding operation, lower insert 330 partially retreats into cavity 321. Accordingly, die springs 323 partially deflect and press upward, thereby placing layers 51a and 52a, tensile member 60a, and coupling layers 230 under compression, as depicted in Figure 37B. Mold 300 then continues to close and lower insert 330 retreats fully within cavity 321, as depicted in Figure 37C. In this position, peripheral bond 53a is formed due to the compression of layers 51a and 52a between ridges 325 and 363. As noted above, the sidewall of bladder 40a is also formed at this stage by drawing second barrier layer 52a into perimeter indentation 331.

When bonding is complete, mold 300 is opened and bladder 40a and excess portions of layers 51a and 52a are removed and permitted to cool. Although the temperature of layers 51a and 52a were between 300 and 320 degrees Fahrenheit following heating, cooling reduces the temperature to between 140 and 150 degrees Fahrenheit upon removal from the mold. Following further cooling, a fluid may be injected into the area of tensile member 60a through the inflation needle and inflation conduit. The excess portions of first barrier layer 51a and second barrier layer 52a are then removed, thereby forming bladder 40a. As an alternative, the order of inflation and removal of excess material may be reversed. As a final step in the process, bladder 40a may be incorporated into the sole of an article of footwear in a conventional manner.

The present invention is disclosed above and in the accompanying drawings with reference to a variety of embodiments. The purpose served by the disclosure, however, is to provide an example of the various features and concepts related to the invention, not to limit the scope of the invention. One skilled in the relevant art will recognize that numerous variations and modifications may be made to the embodiments described above without departing from the scope of the present invention, as defined by the appended claims.

### Clauses

1. A method for forming a fluid-filled bladder, the method comprising steps of:
   placing at least one core between a first sheet and a second sheet of thermoplastic material; and
   bonding the first sheet to the core, bonding the second sheet to the core, and bonding the first sheet and the second sheet together around a periphery of the core by compressing the first sheet, the second sheet, and the core in a mold such that:
      a) a first portion of the mold contacts the first sheet adjacent to the core to bond the first sheet to the core, and the first portion of the mold contacts and shapes substantially all of a sidewall area of the first sheet to form a sidewall of the bladder from the sidewall area,
      b) a second portion of the mold contacts the second sheet adjacent to the core, thereby bonding the second sheet to core, and
      c) the first sheet and the second sheet are compressed together around the periphery of the core to form a peripheral bond between the second sheet and the sidewall area of the first sheet.
2. The method recited in clause 1, further including a step of selecting the core to be a foam member.
3. The method recited in clause 2, further including a step of forming a channel that extends at least partially through the foam member.
4. The method recited in clause 2, further including a step of forming a plurality of channels that extend through the foam member.
5. The method recited in clause 2, further including a step of selecting a polymer of the foam material to be bondable to the thermoplastic material of the first sheet and the second sheet.
6. The method recited in clause 2, further including a step of selecting a polymer of the foam material to be the thermoplastic material of the first sheet and the second sheet.
7. The method recited in clause 2, wherein the step of bonding includes directly bonding the core to the first sheet and the second sheet.
8. The method recited in clause 1, further including a step of heating the first sheet, the second sheet, and the core.
9. The method recited in clause 1, wherein the step of bonding includes forming a portion of the first sheet into a substantially planar first surface of the bladder and forming the second sheet into a substantially planar second surface of the bladder, the first surface being substantially parallel with the second surface.
10. The method recited in clause 9, wherein the step of bonding includes forming the peripheral bond at a location substantially coinciding with the second surface.
11. The method recited in clause 1, wherein the step of bonding includes forming a partial vacuum adjacent to exterior surfaces of the first sheet and the second sheet, the partial vacuum drawing the first sheet against the first portion of the mold and drawing the second sheet against the second portion of the mold.
12. The method recited in clause 1, wherein the step of placing the core between the first sheet and the second sheet includes attaching the core to the first sheet.
13. The method recited in clause 1, further including a step of incorporating the bladder into a sole structure of an article of footwear.
14. The method recited in clause 1, further including a step of selecting the core to be a textile member.
15. The method recited in clause 14, further including a step of selecting the core to have a first outer layer and a second outer layer, the outer layers being spaced apart and connected together by a plurality of connecting members.
16. A method for forming a fluid-filled bladder, the method comprising steps of:
   placing a core formed from a polymer foam material between a first sheet and a second sheet of a thermoplastic material; and
   bonding the first sheet to the core, bonding the second sheet to the core, and bonding the first sheet and the second sheet together around a periphery of the core by compressing the first sheet, the second sheet, and the core between a first portion and a second portion of a mold such that:
      a) the first portion of the mold contacts the first sheet adjacent to the core, thereby bonding the first sheet to the core,
      b) the first portion of the mold forms a first part of the first sheet into a substantially planar first surface of the bladder, and the first portion of the mold contacts and shapes substantially all of a second part of the first sheet to form the second part of the first sheet into a sidewall of the bladder,
      c) the second portion of the mold contacts the second sheet adjacent to the core, thereby bonding the second sheet to the core,
      d) the second portion of the mold forms the second sheet into a substantially planar second surface of the bladder that is substantially parallel to the first surface, and
      e) the first sheet and the second sheet are compressed together around the periphery of the core to form a peripheral bond between the second sheet and the second part of the first sheet, the peripheral bond being positioned at a location substantially coinciding with the second surface.
17. The method recited in clause 16, further including a step of forming a channel that extends at least partially through the foam member.
18. The method recited in clause 16, further including a step of forming a plurality of channels that extend through the foam member.
19. The method recited in clause 16, further including a step of selecting a polymer of the foam material to be bondable to the thermoplastic material of the first sheet and the second sheet.
20. The method recited in clause 16, further including a step of selecting a polymer of the foam material to be the thermoplastic material of the first sheet and the second sheet.
21. The method recited in clause 16, wherein the step of bonding includes directly bonding the core to the first sheet and the second sheet.
22. The method recited in clause 16, further including a step of heating the first sheet, the second sheet, and the core.
23. The method recited in clause 16, further including a step of incorporating the bladder into a sole structure of an article of footwear.
24. A method for manufacturing an article of footwear that incorporates a bladder, the method comprising steps of:
   placing at least one core between a first sheet and a second sheet of thermoplastic material, the core being formed of a polymer foam material that defines a plurality of channels extending at least partially through the foam material;
   bonding the first sheet to the core, bonding the second sheet to the core, and bonding the first sheet and the second sheet together around a periphery of the core by compressing the first sheet, the second sheet, and the core in a mold and inserting a pressurized fluid into a space between the first and second sheets such that:
      a) a first portion of the mold contacts the first sheet adjacent to the core and the pressurized fluid presses the first sheet against the first portion of the mold to bond the first sheet to the core, and the first portion of the mold contacts and shapes substantially all of a sidewall area of the first sheet to form a sidewall of the bladder from the sidewall area, the sidewall area being located around the periphery of the core,
      b) a second portion of the mold contacts the second sheet adjacent to the core and the pressurized fluid presses the second sheet against the second portion of the mold to bond the second sheet to the core, and
      c) the first sheet and the second sheet are compressed together around the periphery of the core to form a peripheral bond between the second sheet and the sidewall of the first sheet; pressurizing the bladder; and
      at least partially encapsulating the bladder in a sole structure of the article of footwear.
25. The method recited in clause 24, further including a step of selecting the polymer foam material to be bondable to the thermoplastic material of the first sheet and the second sheet.
26. The method recited in clause 24, further including a step of selecting the polymer foam material to be the thermoplastic material of the first sheet and the second sheet.
27. The method recited in clause 24, wherein the step of bonding includes directly bonding the core to the first sheet and the second sheet.
28. The method recited in clause 24, further including a step of heating the first sheet, the second sheet, and the core.

## Claims

1. A method for forming a fluid-filled bladder, the method comprising steps of:
placing a core between a first sheet and a second sheet of a thermoplastic material; and
bonding the first sheet to the core, bonding the second sheet to the core, and bonding the first sheet and the second sheet together around a periphery of the core by compressing the first sheet, the second sheet, and the core between a first portion and a second portion of a mold such that:
a) the first portion of the mold contacts the first sheet adjacent to the core, thereby bonding the first sheet to the core,
b) the first portion of the mold forms a first part of the first sheet into a substantially planar first surface of the bladder, and the first portion of the mold contacts and shapes substantially all of a second part of the first sheet to form the second part of the first sheet into a sidewall of the bladder,
c) the second portion of the mold contacts the second sheet adjacent to the core, thereby bonding the second sheet to the core,
d) the second portion of the mold forms the second sheet into a substantially planar second surface of the bladder that is substantially parallel to the first surface, and
e) the first sheet and the second sheet are compressed together around the periphery of the core to form a peripheral bond between the second sheet and the second part of the first sheet, the peripheral bond being positioned at a location substantially coinciding with the second surface.

2. The method recited in Claim 1, further including a step of forming a channel that extends at least partially through the core.

3. The method recited in Claim 1, further including a step of forming a plurality of channels that extend through the core.

4. The method recited in Claim 1, further including selecting a polymer of the core to be bondable to the thermoplastic material of the first sheet and the second sheet and/or selecting a polymer of the core to be the thermoplastic material of the first sheet and the second sheet.

5. The method recited in Claim 1, wherein the step of bonding includes directly bonding the core to the first sheet and the second sheet.

6. The method recited in Claim 1, wherein placing the core includes placing a core that is formed of a polymer foam material.

7. The method recited in Claim 6, wherein placing the core formed of a polymer foam material includes providing the polymer foam material with a plurality of channels that extend at least partially through the foam material.

8. The method recited in Claim 6, further including selecting the polymer foam material to be bondable to the thermoplastic material of the first sheet and the second sheet and/or selecting the polymer foam material to be the thermoplastic material of the first sheet and the second sheet.

9. The method of Claim 1, further comprising inserting a pressurized fluid into a space between the first and second sheets such that:
a) the first portion of the mold contacts the first sheet adjacent to the core and the pressurized fluid presses the first sheet against the first portion of the mold to bond the first sheet to the core, and
b) a second portion of the mold contacts the second sheet adjacent to the core and the pressurized fluid presses the second sheet against the second portion of the mold to bond the second sheet to the core.

10. The method recited in Claim 1, wherein placing the core includes placing a core that is formed of a textile member.

11. The method recited in Claim 9, wherein placing the core formed of a textile member includes providing the textile material with a first outer layer and a second outer layer that are spaced apart and connected together by a plurality of connecting members.

12. The method of any of the preceding claims, further comprising pressurizing the bladder.

13. The method of any of the preceding claims, further comprising incorporating the bladder into a sole structure of an article of footwear.

14. The method recited in any of the preceding claims, wherein the step of bonding includes directly bonding the core to the first sheet and the second sheet.

15. The method recited in any of the preceding claims, further including heating the first sheet, the second sheet, and the core.
